# NEUE EUROPÄISCHE PATENTSCHRIFT

(11) **EP 1 390 606 B2**
(45) Veröffentlichungstag und Bekanntmachung des Hinweises auf die Entscheidung über den Einspruch: **13.04.2011**
(45) Hinweis auf die Patenterteilung: 11.04.2007
(21) Anmeldenummer: 02738092.2
(22) Anmeldetag: 21.05.2002
(51) Int. Cl.: F01K 23/10, F22B 1/18, F02C 7/18

(54) **VORRICHTUNG ZUR KÜHLMITTELKÜHLUNG EINER GASTURBINE UND GAS- UND DAMPFTURBINENANLAGE MIT EINER DERARTIGEN VORRICHTUNG**
DEVICE FOR COOLING COOLANT IN A GAS TURBINE AND GAS AND STEAM TURBINE WITH SAID DEVICE
DISPOSITIF DE REFROIDISSEMENT DU FLUIDE DE REFROIDISSEMENT D'UNE TURBINE A GAZ ET ENSEMBLE TURBINE A GAZ ET TURBINE A VAPEUR COMPORTANT UN TEL DISPOSITIF

(30) Priorität: 31.05.2001 EP 01113305
(43) Veröffentlichungstag der Anmeldung: 25.02.2004
(73) Patentinhaber: SIEMENS AKTIENGESELLSCHAFT, 80333 München (DE)
(72) Erfinder: FRANKE, Joachim, 90518 Altdorf (DE); SCHMID, Erich, 91080 Marloffstein (DE)
(86) Internationale Anmeldenummer: PCT/EP2002/005571
(87) Internationale Veröffentlichungsnummer: WO 2002/097242

(56) Entgegenhaltungen:
- EP-B1- 0 709 561
- WO-A-99/57421
- DE-A- 4 446 862
- DE-A1- 10 041 413
- DE-A1- 19 545 308
- GB-A- 2 318 833
- US-A- 5 491 971
- US-A- 5 809 943

## Beschreibung

Die Erfindung bezieht sich auf eine Vorrichtung zur Kühlmittelkühlung einer Gasturbine. Sie betrifft weiterhin eine Gas- und Dampfturbinenanlage mit einem einer Gasturbine rauchgasseitig nachgeschalteten Abhitzedampferzeuger, dessen Heizflächen in den Wasser-Dampf-Kreislauf einer Dampfturbine geschaltet sind.

Eine Gasturbine, insbesondere in einer Gas- und Dampfturbinenanlage, wird üblicherweise zur Erzeugung elektrischer Energie eingesetzt. Zur Steigerung der Leistungsfähigkeit der Gasturbine und damit zur Erzielung eines möglichst hohen Wirkungsgrades wird dabei eine besonders hohe Temperatur des - Arbeitsmittels am Eintritt der Turbine von z. B. 1200°C bis 1500°C angestrebt. Eine derartig hohe Turbineneintrittstemperatur kann allerdings Werkstoffprobleme mit sich bringen, insbesondere in Bezug auf die Hitzebeständigkeit der Turbinenschaufeln.

Um bei einer derartig gesteigerten Turbineneintrittstemperatur auch bei längerer Betriebsdauer zuverlässig arbeiten zu können, ist in modernen Gasturbinen üblicherweise eine Kühlung heißgehender Turbinenteile, wie beispielsweise von Lauf- und/oder Leitschaufeln, vorgesehen. Dazu werden diese Turbinenteile mit einem Kühlmittel, beispielsweise mit Kühlluft, beaufschlagt. Als Kühlluft kann dabei insbesondere ein Teilstrom der vom Verdichter der Gasturbine gelieferten Verdichterluft herangezogen werden. Um diesen Teilstrom der Verdichterluft, dessen Temperatur je nach Betriebsart der Gasturbine bei über 400°C liegen kann, als Kühlmittel für die Gasturbine heranziehen zu können, ist üblicherweise eine Abkühlung dieses Teilstroms auf Temperaturen von beispielsweise unter 200°C vorgesehen.

Eine derartige Kühlmittelkühlung einer Gasturbine erfolgt üblicherweise in einem der Gasturbine zugeordneten Kühlmittelkühler, in dem die Abkühlung des Kühlmittels über einen Wärmetausch erfolgt. Der in diesem Sinne als Wärmetauscher ausgebildete Kühlmittelkühler kann dabei sekundärseitig als Niederdruckdampferzeuger ausgebildet sein, in dem ein Strömungsmedium verdampft und der dabei erzeugte Dampf zur Energierückgewinnung in den Wasser-Dampf-Kreislauf einer Dampfturbine eingespeist oder auch einem Fernwärmenetz zugeführt wird. Dabei werden sogenannte Wasserrohrdampferzeuger oder Rauchrohrdampferzeuger eingesetzt, die Sattdampf produzieren. Siehe hierzu DE-A-4 446 862, US-A-5 809 943, oder auch EP-B-0 773 399. Die EP-B-0 773 349 behandelt einen Helix-Dampferzeuger für Kraftwerksanlagen, welcher verdichtete oder vorverdichtete Luft aus der Verdichtereinheit zu Kühlluft für die Kühlung thermisch belasteter Aggregate der Kraftwerksanlage bereitstellt. Hierzu ist der Helix-Dampferzeuger in einem vertikal angeordneten zylindrischen Druckgefäß angeordnet und seine spiralförmig gewundenen, durchgehend von unten nach oben geführten Rohre füllen einen Raum zwischen einem inneren und einem äußeren Mantelrohr aus.

Gerade bei der Auslegung von Gas- und Dampfturbinenanlagen ist ein besonders hoher Anlagenwirkungsgrad bei der Umsetzung des Energieinhalts eines Brennstoffs in elektrische Energie ein besonders gängiges Auslegungsziel. Im Hinblick auf dieses Auslegungsziel sind die bislang erreichten Ergebnisse bei der Übertragung der bei der Kühlung des Kühlmittels der Gasturbine anfallenden Wärme in den Wasser-Dampf-Kreislauf einer zugeordneten Dampfturbine nur begrenzt. Zwar wurden zur Steigerung des bei der Nutzung der bei der Kühlung des Kühlmittels der Gasturbine anfallenden Wärme erzielbaren Wirkungsgrades auch kombinierte Lösungen mit einem zweistufigen Kühlmittelkühler in Betracht gezogen, bei dem bei der Kühlung des Kühlmittels sowohl Niederdruck- als auch Mitteldruckdampf erzeugt wird. Wie sich jedoch herausgestellt hat, ist bei einer derartigen Lösung zwar ein geringfügig erhöhter Wirkungsgrad hinsichtlich der Nutzung der bei der Kühlung des Kühlmittels der Gasturbine anfallenden Wärme erreichbar, wobei jedoch andererseits ein unverhältnismäßig hoher Aufwand bei der Anlagentechnik anfällt.

Der Erfindung liegt daher die Aufgabe zugrunde, eine Vorrichtung zur Kühlmittelkühlung einer Gasturbine anzugeben, die bei vergleichsweise einfacher Bauweise und geringer anlagentechnischer Komplexität einen besonders hohen Wirkungsgrad bei der Nutzung der bei der Kühlung des Kühlmittels der Gasturbine anfallenden Wärme ermöglicht. Zudem soll eine Gas- und Dampfturbinenanlage der oben genannten Art angegeben werden, bei der einerseits eine gute Gasturbinenkühlung gewährleistet ist, wobei andererseits durch eine besonders effektive Nutzung der dabei gewonnenen Wärme ein hoher Gesamtwirkungsgrad der Gas- und Dampfturbinenanlage erreicht ist.

Bezüglich der Vorrichtung zur Kühlmittelkühlung der Gasturbine wird diese Aufgabe wie im Anspruch 1 angegeben gelöst.

Die Erfindung geht von der Überlegung aus, daß ein hoher Wirkungsgrad bei der Nutzung der bei der Kühlung des Kühlmittels der Gasturbine anfallenden Wärme durch die Produktion vergleichsweise hochwertigen Dampfes bei der Kühlmittelkühlung erreichbar ist. In Abkehr von den bisher zur Anwendung vorgesehenen Konzepten, bei denen vergleichsweise hochwertige Energie aus der Verdichterluft in vergleichsweise minderwertigen Dampf umgesetzt wird, ist daher die Produktion vergleichsweise hochwertigen Dampfes, also von Dampf bei hohem Druck und hoher Temperatur, vorgesehen. Thermodynamisch besonders günstig und in diesem Sinne besonders hochwertig ist der bereitgestellte Dampf dabei, wenn er nicht als Sattdampf, sondern als überhitzter Dampf bereitgestellt werden kann. Dies ist mit vergleichsweise geringer anlagentechnischer Komplexität des Kühlmittelkühlers auch in einem vergleichsweise großen Parameterbereich der Betriebsparameter, indem der Kühlmittelkühler nach dem sogenannten BENSON-Prinzip, also als Zwangdurchlauf-Dampferzeuger, ausgelegt ist und der Kühlmittelkanal vorteilhafterweise für eine Durchströmung des Kühlmittels für die Gasturbine in im Wesentlichen horizontaler Richtung ausgebildet ist, wobei die Verdampferrohre mit ihren Längsachsen in im Wesentlichen senkrechter Richtung ausgerichtet sind. Bei einem derartig ausgelegten Dampferzeuger erfolgt eine vollständige Verdampfung des Strömungsmediums in den Verdampferrohren in einem einzigen Durchlauf. Gerade eine derartige Auslegung des Kühlmittelkühlers erlaubt einen variablen, betriebsunabhängigen Verdampfungsendpunkt in den hintereinandergeschalteten Verdampferrohren über einen vergleichsweise weiten Bereich, wobei in dem Verdampfungsendpunkt nachfolgenden Teil der Verdampferrohre eine Überhitzung des Dampfes erfolgt.

Ein besonders stabiles Betriebsverhalten bei geringer Störanfälligkeit der Vorrichtung zur Kühlmittelkühlung oder des Kühlluftkühlers ist erreichbar, indem diese in sogenannter "liegender Bauart" ausgeführt ist. Bei einer derartigen Bauweise sind vergleichsweise geringe strömungsmediumseitige Druckverluste erreichbar, wobei insbesondere keine untere Grenze für eine Mindestdurchströmung der Verdampferrohre gegeben ist.

Eine derartige Auslegung ist somit besonders im Schwachlast- oder Anfahrbetrieb besonders zuverlässig betreibbar. Zudem ist bei einer derartigen "liegenden Bauweise" eine einfache Aufstellung des Kühlluftkühlers ohne aufwendiges Stützgerüst auf vergleichsweise einfach gehaltenen Streifenfundamenten möglich, wobei zudem ein gute Zugänglichkeit des eigentlichen Kühlmittelkanals gewährleistet ist. Wartungs- und Inspektionsarbeiten an einem derartig ausgestalteten Kühlluftkühler sind besonders einfach gehalten, zumal ein seitliches Herausziehen der durch die Verdampferrohre gebildeten Heizflächen möglich ist.

Für eine vergleichsweise einfache Bauweise ist als Kühlmittel für die Gasturbine vorteilhafterweise Verdichterluft aus der Gasturbine vorgesehen. Somit ist der Kühlmittelkanal vorzugsweise mit Verdichterluft aus der Gasturbine beaufschlagbar, und die Vorrichtung zur Kühlmittelkühlung der Gasturbine ist in diesem Fall ein Kühlluftkühler.

Um einen besonders guten Wärmeübergang vom zu kühlenden Kühlmittel auf das die Verdampferrohre sekundärseitig durchströmende Strömungsmedium zu gewährleisten und somit in allen Betriebszuständen eine zuverlässige Kühlung der Verdampferrohre sicherzustellen, weisen diese vorzugsweise jeweils eine Innenberippung auf. Durch eine derartige Innenberippung wird ein Drall im das jeweilige Verdampferrohr durchströmenden Strömungsmedium erzeugt. Aufgrund dieses Dralls wird das Strömungsmedium infolge der entstehenden Fliehkraft besonders zuverlässig an die Innenwand des jeweiligen Verdampferrohrs gepreßt. Dabei entsteht ein besonders guter Wärmeübergang von der Innenwand des Verdampferrohrs auf das darin geführte Strömungsmedium.

Alternativ oder zusätzlich weisen die Verdampferrohre zweckmäßigerweise eine Außenberippung auf. Bei einer derartigen Außenberippung handelt es sich beispielsweise um ein sich spiralartig um das jeweilige Verdampferrohr windendes Metallband. Dieses erhöht die dem Heißgasstrom ausgesetzte Fläche des Verdampferrohres und trägt somit zusätzlich zum Wärmeeintrag in dieses bei.

Da in den Verdampferrohren eine vollständige Verdampfung des Strömungsmediums mit anschließender Überhitzung stattfindet, ist die Kühlleistung des Kühlmittelkühlers in gewissen Grenzen von der Durchströmrate des Strömungsmediums abhängig. Um eine Anpassung der Kühlleistung der Vorrichtung zur Kühlmittelkühlung an möglicherweise auch variierende Betriebszustände der Gasturbine zu ermöglichen, ist vorteilhafterweise die Beaufschlagung der Verdampferrohre mit Strömungsmedium einstellbar. Dazu sind die Verdampferrohre vorzugsweise über eine diesen eingangsseitig vorgeschaltete Zuführleitung mit dem Strömungsmedium beaufschlagbar, wobei in die Zuführleitung Mittel zum Einstellen der Durchströmrate des Strömungsmediums geschaltet sind. Insbesondere umfassen die Mittel zum Einstellen der Durchströmrate des Strömungsmediums dabei vorzugsweise ein in die Zuführleitung geschaltetes Drosselorgan.

Um eine besonders hohe Flexibilität bei der Kühlung des Kühlmittels der Gasturbine zu ermöglichen, ist die Kühlleistung dabei vorteilhafterweise in Abhängigkeit von einem Temperaturkennwert des zu kühlenden Kühlmittels und im Hinblick auf eine Solltemperatur des Kühlmittels einstellbar. Dazu sind die Mittel zum Einstellen der Durchströmrate des Strömungsmediums in besonders vorteilhafter Weiterbildung Teil einer Regelung, wobei die Temperatur des Kühlmittels der Gasturbine als Führungsgröße dient und mit einem betriebspunktabhängigen Sollwert verglichen wird. Den Mitteln zum Einstellen der Durchströmrate des Strömungsmediums ist dabei vorteilhafterweise eine Regeleinrichtung zugeordnet, die eingangsseitig mit einem dem Kühlmittelkanal zugeordneten Temperaturfühler verbunden ist. Durch die bei einer derartigen Anordnung erreichbare Flexibilität bei der Anpassung der Kühlleistung an den aktuellen Betriebszustand und die aktuellen Kühlerfordernisse ist ein derartiger Kühlmittelkühler für eine Vielzahl gängiger Gasturbinentypen anwendbar.

Bezüglich der Gas- und Dampfturbinenanlage der oben genannten Art wird die Aufgabe gelöst, indem der Gasturbine eine Vorrichtung der genannten Art zugeordnet ist, wobei die Verdampferrohre der Vorrichtung eingangsseitig über eine Zuführleitung mit dem Speisewasserstrang des Wasser-Dampf-Kreislaufs der Dampfturbine verbunden sind.

Gerade beim Einsatz in einer Gas- und Dampfturbinenanlage trägt der durch den als Zwangdurchlauf-Verdampfer ausgestaltete Kühlmittelkühler erreichbare vergleichsweise hohe Wirkungsgrad bei der Nutzung der bei der Kühlung des Kühlmittels der Gasturbine anfallenden Wärme in besonders vorteilhafter Weise zu einem ohnehin bei der Auslegung einer Gas- und Dampfturbinenanlage üblicherweise gegebenen Auslegungsziel bei. Der Speisewasserstrang, von dem ein Teilstrom zur Beaufschlagung der Verdampferrohre des Kühlmittelkühlers mit Strömungsmedium abgezweigt wird, umfaßt dabei in üblicher Lesart den Teilbereich des Wasser-Dampf-Kreislaufs der Dampfturbine vom Kondensator bis hin zu den Verdampferheizflächen. Bei einer Beaufschlagung der Verdampferrohre des Kühlmittelkühlers vom Speisewasserstrang aus kann somit aus dem Kondensator abströmendes Kondensat oder auch den Heizflächen zuströmendes Speisewasser vorgesehen sein.

Das Speisewasser, das durch eine vorgeschaltete Speisewasserpumpe üblicherweise unter vergleichsweise hohem Druck steht, kann dabei unmittelbar den Verdampferrohren des Kühlmittelkühlers zugeführt werden. Der für den Durchlauf durch die Verdampferrohre erforderliche Druck wird dabei analog zu den in den eigentlichen Wasser-Dampf-Kreislauf der Dampfturbine geschalteten Heizflächen durch die Speisewasserpumpe geliefert. Bei der Verwendung von Kondensat zur Beaufschlagung der Verdampferrohre des Kühlmittelkühlers kann das erforderliche Druckniveau für den Durchlauf durch die Verdampferrohre unter Umgehung der Speisewasserpumpe des Wasser-Dampf-Kreislaufs der Dampfturbine auch über eine eigene verdichterpumpe erzeugt werden.

Je nach Bauart der Gas- und Dampfturbinenanlage kann der Wasser-Dampf-Kreislauf der Dampfturbine mehrere Druckstufen, insbesondere zwei oder drei Druckstufen, umfassen. Gerade bei einer derartigen mehrstufigen Ausgestaltung des Wasser-Dampf-Kreislaufs der Dampfturbine ist eine besonders wirksame Nutzung der bei der Kühlung des Kühlmittels der Gasturbine anfallenden Wärme ermöglicht, indem der Kühlmittelkühler zur Bereitstellung vergleichsweise hochwertigen Dampfes an die höchste Druckstufe des mehrstufig ausgebildeten Wasser-Dampf-Kreislaufs der Dampfturbine angepaßt ist. Dazu sind die Verdampferrohre der der Gasturbine zugeordneten Vorrichtung zur Kühlmittelkühlung vorteilhafterweise ausgangsseitig an eine Hochdruckstufe des Wasser-Dampf-Kreislaufs der Dampfturbine angeschlossen. Dabei kann eine Einspeisung des im Kühlmittelkühler erzeugten Dampfes beispielsweise in eine Hochdrucktrommel oder für den Fall, daß der Abhitzedampferzeuger im Hochdruckbereich auch als Zwangdurchlauf-Dampferzeuger ausgebildet ist, in eine Hochdruck-Abscheideflasche erfolgen.

Üblicherweise ist in den Speisewasserstrang des Wasser-Dampf-Kreislaufs der Dampfturbine einer Gas- und Dampfturbinenanlage ein Vorwärmer geschaltet. Dabei kann es sich um einen auch als Economiser bezeichneten Kondensatvorwärmer und/oder um einen Speisewasservorwärmer handeln. In besonders vorteilhafter Weiterbildung ist eine variable und an die jeweilige Betriebssituation besonders flexibel anpaßbare Kühlmittelkühlung der Gasturbine erreichbar, indem die Verdampferrohre des Kühlmittelkühlers strömungsmediumseitig sowohl mit nicht vorgewärmtem als auch mit vorgewärmtem Strömungsmedium (also Speisewasser oder Kondensat) beaufschlagbar sind, wobei das Mischungsverhältnis zwischen vorgewärmtem und nicht vorgewärmtem Strömungsmedium bedarfsweise einstellbar ist. Dazu ist die den Verdampferrohren des Kühlmittelkühlers eingangsseitig vorgeschaltete Zuführleitung vorteilhafterweise ihrerseits eingangsseitig über eine erste Teilstromleitung mit einem dem Vorwärmer vorgeschalteten ersten Teilstück des Speisewasserstrangs und über eine zweite Teilstromleitung mit einem dem Vorwärmer nachgeschalteten zweiten Teilstück des Speisewasserstrangs verbunden. Dabei kann über die erste Teilstromleitung eine Bespeisung der Verdampferrohre des Kühlmittelkühlers mit vergleichsweise kaltem Strömungsmedium erfolgen, wohingegen über die zweite Teilstromleitung eine Bespeisung der Verdampferrohre des Kühlmittelkühlers mit vorgewärmtem Strömungsmedium ermöglicht ist.

Vorteilhafterweise ist das Mischungsverhältnis von nicht vorgewärmtem und vorgewärmtem Strömungsmedium bei der Bespeisung der Verdampferrohre des Kühlmittelkühlers einstellbar. Dazu sind in die erste und in die zweite Teilstromleitung in besonders vorteilhafter Ausgestaltung jeweils Mittel zum Einstellen der Durchströmrate des jeweiligen Teilstroms an Strömungsmedium geschaltet. Diesem ist zweckmäßigerweise eine Regeleinrichtung zugeordnet, über die das Zuströmverhältnis der Teilströme in den Teilstromleitungen in Abhängigkeit von einem für einen Temperaturwert des zu kühlenden Kühlmittels charakteristischen Kennwert einstellbar ist.

Insbesondere kann dabei der Hauptstrom des den Verdampferrohren des Kühlmittelkühlers zugeführten Strömungsmediums aus von der Speisewasserpumpe geliefertem vorgewärmtem Speisewasser bestehen, wobei kaltes Kondensat gezielt zur Temperatureinstellung des den Verdampferrohren des Kühlmittelkühlers zuströmenden Strömungsmediums zugemischt wird.

Die mit der Erfindung erzielten Vorteile bestehen insbesondere darin, daß durch die Ausgestaltung des Kühlmittelkühlers als Dampferzeuger für das Strömungsmedium in Zwangdurchlauf-Bauart die Bereitstellung von in thermodynamischer Hinsicht vergleichsweise hochwertigem Dampf bei der Kühlmittelkühlung für die Gasturbine ermöglicht ist. Gerade aufgrund der Bauweise als Zwangdurchlauf-Dampferzeuger ist zudem bei vergleichsweise einfach gehaltener Bauart ein Einsatz des Kühlmittelkühlers im überkritischen oder auch im unterkritischen Druckbereich ermöglicht, so daß eine zuverlässige Kühlmittelkühlung auch in modernen Kraftwerksanlagen mit hohen Auslegungsdrücken oder bei der Nachrüstung bereits bestehender Anlagen mit vergleichsweise einfachen Mitteln gewährleistet ist. Der Kühlmittelkühler eignet sich insbesondere auch für den sogenannten Solo-Betrieb, bei dem keine weitere Nutzung des erzeugten Dampfes in einer zugeordneten Dampfturbinenanlage erfolgt.

Besonders vorteilhaft ist jedoch die Nutzung des erzeugten hochwertigen Dampfes in einer entsprechenden Druckstufe des Wasser-Dampf-Kreislaufs einer Dampfturbine. Gerade die Auslegung als Zwangdurchlauf-Dampferzeuger ermöglicht dabei infolge des variablen Verdampfungsendpunktes eine zuverlässige Abdeckung eines vergleichsweise großen Bereichs an Betriebsparametern. Insbesondere bei den bei der Nutzung von Verdichterluft der Gasturbine als Kühlmittel auftretenden Temperaturen von bis zu etwa 500°C kann bei Verwendung temperaturfester Materialien wie beispielsweise warmfesten Stählen wie 13 Cro Mo 44 oder 15 Mo 3 eine Überhitzungsgefahr in allen Betriebszuständen nahezu ausgeschlossen werden. Daher ist insbesondere keine Bespeisung der Verdampferrohre mit einer Mindestmenge an Strömungsmedium erforderlich. Demzufolge ist gerade bei der Ausgestaltung des Kühlmittelkühlers als Dampferzeuger nach dem Zwangdurchlauf-Prinzip ein Anfahr- oder Schwachlastbetrieb mit trockenen oder teilgefüllten Verdampferheizflächen möglich, ohne daß eine vergleichsweise aufwendige Abscheideflasche zwischen einzelnen Druckstufen der Verdampferrohre erforderlich wäre.

Die Auslegung des Kühlmittelkühlers als Zwangdurchlauf-Dampferzeuger ermöglicht somit auch sofort nach dem Anfahren der Anlage eine Beeinflussung der Kühlmitteltemperatur für die Gasturbine. Durch die Möglichkeit des Anfahrens des Kühlmittelkühlers mit "trockenen" Verdampferrohren sind somit direkt nach dem Start der Gasturbine keine nennenswert großen Wassermassen im Kühlmittelkühler mit zu beheizen, so daß auch beim Anfahren der Gasturbine keine Gefahr einer ungewollt starken Abkühlung der Gasturbinen-Kühlluft besteht, die insbesondere zu einer Taupunktunterschreitung des in der Kühlluft mitgeführten Wasserdampfes mit folgender Auskondensation führen könnte.

Ein Ausführungsbeispiel der Erfindung wird anhand einer Zeichnung näher erläutert. Darin zeigen:
- Figuren 1 - 3: jeweils schematisch eine Gas- und Dampfturbi- nenanlage, deren Gasturbine eine Vorrichtung zur Kühlmittelkühlung zugeordnet ist,
- Figur 4: die der Gasturbine der Gas- und Dampfturbinen- anlage gemäß den Figuren 1 bis 3 zugeordnete Vorrichtung zur Kühlmittelkühlung im Längs- schnitt, und
- Figur 5: die Vorrichtung gemäß Figur 4 im Querschnitt.

Gleiche Teile sind in allen Figuren mit denselben Bezugszeichen versehen.

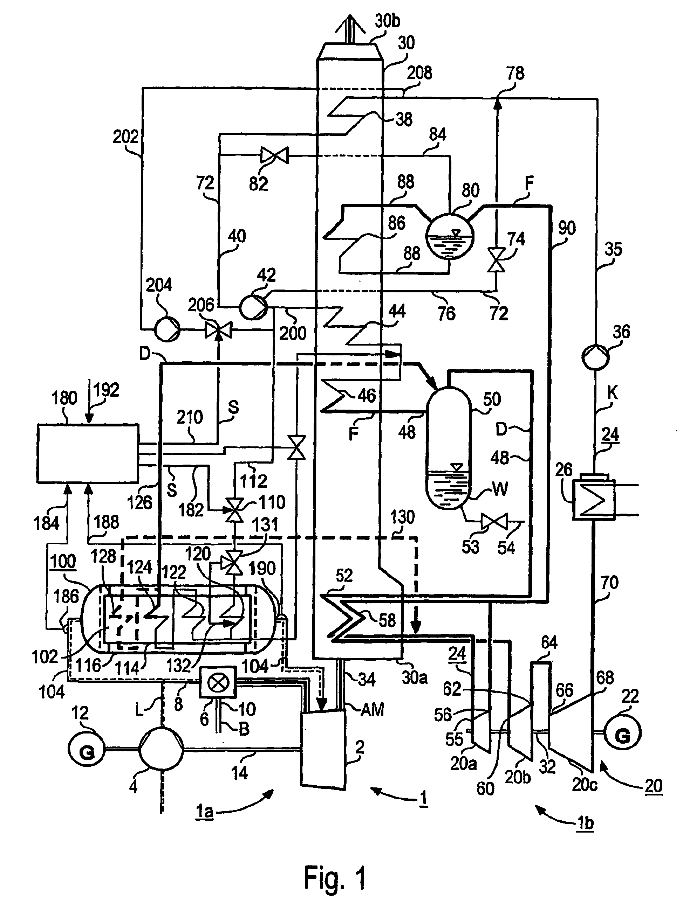

Die Gas- und Dampfturbinenanlage 1, 1', 1" gemäß Figur 1, Figur 2 bzw. Figur 3 umfaßt jeweils eine Gasturbinenanlage 1a und eine Dampfturbinenanlage 1b. Die Gasturbinenanlage 1a umfaßt dabei jeweils eine Gasturbine 2 mit angekoppeltem Luftverdichter 4 und eine der Gasturbine 2 vorgeschaltete Brennkammer 6, die an eine Frischluftleitung 8 des Luftverdichters 4 angeschlossen ist. In die Brennkammer 6 der Gasturbine 2 mündet eine Brennstoffleitung 10. Die Gasturbine 2 und der Luftverdichter 4 sowie ein Generator 12 sitzen auf einer gemeinsamen Welle 14.

Die Dampfturbinenanlage 1b umfaßt eine Dampfturbine 20 mit angekoppeltem Generator 22 und in einem Wasser-Dampf-Kreislauf 24 einen der Dampfturbine 20 nachgeschalteten Kondensator 26 sowie einen als Abhitzedampferzeuger für die Gas- und Dampfturbinenanlage 1 vorgesehenen Dampferzeuger 30. Die Dampfturbine 20 besteht aus einer ersten Druckstufe oder einem Hochdruckteil 20a und einer zweiten Druckstufe oder einem Mitteldruckteil 20b sowie einer dritten Druckstufe oder einem Niederdruckteil 20c, die über eine gemeinsame Welle 32 den Generator 22 antreiben.

Zum Zuführen von in der Gasturbine 2 entspanntem Arbeitsmittel AM oder Rauchgas in dem Dampferzeuger 30 ist eine Abgasleitung 34 an einen Eingang 30a des als Abhitzedampferzeuger ausgebildeten Dampferzeugers 30 angeschlossen. Das entspannte Arbeitsmittel AM aus der Gasturbine 2 verläßt den Dampferzeuger 30 über dessen Ausgang 30b in Richtung auf einen nicht näher dargestellten Kamin.

Der der Dampfturbine 20 nachgeschaltete Kondensator 26 ist über eine Kondensatleitung 35, in die eine Kondensatpumpe 36 geschaltet ist, mit einem im Dampferzeuger 30 angeordneten Economiser oder Kondensatvorwärmer 38 verbunden. Der Kondensatvorwärmer 38 ist ausgangsseitig über eine Zuführleitung 40, in die eine als Hochdruckpumpe ausgebildete Speisewasserpumpe 42 geschaltet ist, mit einem im Dampferzeuger 30 angeordneten Hochdruckvorwärmer oder Speisewasservorwärmer 44 verbunden. Die Kondensatleitung 35 bildet somit gemeinsam mit dem Kondensatvorwärmer 38, der Zuführleitung 40 und dem Speisewasservorwärmer 44 den Speisewasserstrang der Dampfturbinenanlage 1b.

Der Hochdruckteil des Wasser-Dampf-Kreislaufs 24 der Dampfturbinenanlage 1b könnte als Umlaufverdampfer mit einem ein- und ausgangsseitig zur Bildung eines geschlossenen Verdampferumlaufs an eine Hochdrucktrommel angeschlossenen Hochdruckverdampfer ausgebildet sein. Im Ausführungsbeispiel ist der Dampferzeuger 30 in seinem Hochdruckbereich jedoch als Durchlauf-Dampferzeuger ausgebildet. Dazu ist der Speisewasservorwärmer 44 ausgangsseitig an einen für einen Durchlaufbetrieb ausgelegten Verdampfer 46 angeschlossen. Der Verdampfer 46 ist seinerseits ausgangsseitig über eine Dampfleitung 48, in die ein auch als Abscheideflasche bezeichneter Wasserabscheider 50 geschaltet ist, an einen Überhitzer 52 angeschlossen. Mit anderen Worten: der Wasserabscheider 50 ist zwischen den Verdampfer 46 und den Überhitzer 52 geschaltet.

Der Wasserabscheider 50 ist dabei über die Dampfleitung 48 mit Frischdampf F aus dem Verdampfer 46 bespeisbar. Zusätzlich ist an den Wasserabscheider 50 eine mit einem Ventil 53 absperrbare Ablaßleitung 54 zur Abfüllung von Wasser W aus dem Wasserabscheider 50 angeschlossen.

Der Überhitzer 52 ist ausgangsseitig mit dem Dampfeinlaß 55 des Hochdruckteils 20a der Dampfturbine 20 verbunden. Der Dampfauslaß 56 des Hochdruckteils 20a der Dampfturbine 20 ist über einen im Dampferzeuger 30 angeordneten Zwischenüberhitzer 58 an den Dampfeinlaß 60 des Mitteldruckteils 20b der Dampfturbine 20 angeschlossen. Dessen Dampfauslaß 62 ist über eine Überströmleitung 64 mit dem Dampfeinlaß 66 des Niederdruckteils 20c der Dampfturbine 20 verbunden. Der Dampfauslaß 68 des Niederdruckteils 20c der Dampfturbine 20 ist über eine Dampfleitung 70 an den Kondensator 26 angeschlossen, so daß ein geschlossener Wasser-Dampf-Kreislauf 24 entsteht.

Der Speisewasserstrang der Gas- und Dampfturbinenanlage 1, 1', 1" könnte weiterhin an geeigneter Stelle, also insbesondere in Strömungsrichtung des Kondensats oder Speisewassers gesehen vor der Speisewasserpumpe 42, einen Speisewasserbehälter zur bedarfsweisen Entgasung von Kondensat und zur Zwischenspeicherung des als Speisewasser benötigten Kondensats aufweisen. Im Ausführungsbeispiel ist der Speisewasserstrang jedoch unter Verzicht auf einen Speisewasserbehälter ausgestaltet, wobei zur bedarfsweisen Zwischenspeicherung von Kondensat K ein Umwälzkreis 72 vorgesehen ist. Zur Bildung dieses Umwälzkreises 72 ist an die Speisewasserpumpe 42 in einem mittleren Druckbereich eine mit einem Ventil 74 absperrbare Zweigleitung 76 angeschlossen, die in einer vor dem Kondensatvorwärmer 38 gelegenen Einspeisestelle 78 wieder in die Kondensatleitung 35 einmündet. Der Umwälzkreis 72 ist somit durch den Kondensatvorwärmer 38, die Zuführleitung 40 und die Zweigleitung 76 gebildet.

In einer weiteren Druckstufe, die im Ausführungsbeispiel als Mitteldruckstufe ausgebildet ist, umfaßt der Dampferzeuger 30 eine Mitteldrucktrommel 80. Zur Bespeisung mit vorgewärmtem Kondensat K ist die Mitteldrucktrommel 80 über eine mit einem Ventil 82 absperrbare Zweigleitung 84 an die Zuführleitung 40 angeschlossen. Desweiteren ist die Mitteldrucktrommel 80 mit einem im Dampferzeuger 30 angeordneten Mitteldruckverdampfer 86 zur Bildung eines Wasser-Dampf-Umlaufs 88 verbunden. Zum Abführen von Frischdampf F ist die Mitteldrucktrommel 80 über eine Dampfleitung 90 an den Zwischenüberhitzer 58 angeschlossen.

Der Wasser-Dampf-Umlauf ist im Ausführungsbeispiel dabei als Naturumlauf ausgestaltet, bei dem das zur Aufrechterhaltung des Umlaufs erforderliche Druckgefälle durch den geodätischen Druckunterschied bereitgestellt wird. Alternativ kann der Wasser-Dampf-Umlauf 88 jedoch auch als Zwangumlauf ausgestaltet sein, oder es kann die gesamte Mitteldruckstufe auch unter Verzicht auf die Mitteldrucktrommel 80 als Zwangdurchlauf-Verdampfer ausgebildet sein.

Im Ausführungsbeispiel umfaßt der Wasser-Dampf-Kreislauf 24 somit zwei Druckstufen. Alternativ kann der Wasser-Dampf-Kreislauf 24 jedoch auch eine andere geeignete Anzahl von Druckstufen aufweisen, insbesondere dreistufig ausgebildet sein. Die Gas- und Dampfturbinenanlage 1, 1', 1" ist für einen besonders hohen Wirkungsgrad ausgelegt. Dazu ist unter anderem aus thermodynamischen Gründen ein Betrieb der Gasturbine 2 bei vergleichsweise hohen Temperaturen von beispielsweise 1200°C oder mehr des aus der Brennkammer 6 abströmenden Arbeitsmediums AM vorgesehen. Um bei einer derartig hohen Turbineneintrittstemperatur Werkstoffprobleme, insbesondere im Hinblick auf die Hitzebeständigkeit der Turbinenschaufeln der Gasturbine 2 auch bei längerfristigem Betrieb, zuverlässig zu vermeiden, ist die Gasturbine 2 zumindest im Hinblick auf ihre heißlaufenden Teile kühlbar ausgebildet. Dazu ist vorgesehen, als Kühlmittel einen Teilstrom der aus dem Luftverdichter 4 abströmenden Verdichterluft L unter Umgehung der Brennkammer 6 als Kühlmittel in die Gasturbine 2 einzuspeisen.

Um dabei eine zuverlässige und ausreichende Kühlwirkung des als Kühlmittel oder Kühlluft vorgesehenen Teilstroms zu gewährleisten, ist eine Kühlung dieses Teilstroms vor dessen Eintritt in die Gasturbine 2 vorgesehen. Dazu ist der Gasturbine 2 eine Vorrichtung 100 zur Kühlmittelkühlung oder Kühlluftkühlung zugeordnet, die den aus dem Luftverdichter 4 abströmenden Teilstrom von einer Temperatur von beispielsweise mehr als 400°C vor dessen Eintritt in die Gasturbine 2 auf ein Temperaturniveau von etwa 200°C abkühlt. Die Vorrichtung 100 zur Kühlmittelkühlung der Gasturbine 2 weist einen Kühlmittelkanal 102 auf, der in eine von der Frischluftleitung 8 des Luftverdichters 4 abzweigende und in die Gasturbine 2 mündende Kühlluftleitung 104 geschaltet ist. Der Kühlmittelkanal 102 der Vorrichtung 100 ist somit über die Kühlluftleitung 104 mit der Gasturbine 2 verbunden.

Für einen besonders hohen Gesamtwirkungsgrad der Gas- und Dampfturbinenanlage 1, 1', 1" ist auch die Vorrichtung 100 zur Kühlmittelkühlung der Gasturbine 2 für eine besonders wirksame Nutzung der bei der Kühlung der Kühlluft für die Gasturbine 2 anfallenden Wärme ausgelegt. Um diese Wärme besonders nutzbringend in den Wasser-Dampf-Kreislauf 24 der Dampfturbinenanlage 1b einzubringen, ist die Vorrichtung 100 zur Kühlmittelkühlung der Gasturbine 2 als Wärmetauscher ausgebildet, der primärseitig mit der zu kühlenden Kühlluft für die Gasturbine 2 beaufschlagbar ist, und der sekundärseitig eine Anzahl von hinsichtlich eines Strömungsmediums zur Bildung eines Zwangdurchlauf-Dampferzeugers zusammengeschaltete Verdampferrohre aufweist. Als Strömungsmedium ist dabei Speisewasser oder Kondensat K aus dem Wasser-Dampf-Kreislauf 24 der Dampfturbinenanlage 1b vorgesehen.

Zur Zuführung dieses Strömungsmediums ist eine mit einem Drosselventil oder Drosselorgan 110 absperrbare Zuführleitung 112 eingangsseitig mit dem Speisewasserstrang des Wasser-Dampf-Kreislaufs 24 der Dampfturbinenanlage 1b verbunden. Ausgangsseitig mündet die Zuführleitung 112 in einer im von einem Innengehäuse 114, das seinerseits von einem Druckgefäß 116 umschlossen ist, gebildeten Strömungskanal 102 angeordneten ersten Verdampferheizfläche 120. Der ersten Verdampferheizfläche 120 sind strömungsmediumseitig eine zweite Verdampferheizfläche 122 und eine dritte Verdampferheizfläche 124 nachgeschaltet, die ihrerseits ebenfalls im Kühlmittelkanal 102 der Vorrichtung 100 angeordnet sind. Die Verdampferheizflächen 120, 122, 124 sind dabei als Zwangdurchlauf-Verdampferheizflächen ausgebildet, so daß das Strömungsmedium beim Durchtritt durch die hintereinandergeschalteten Verdampferheizflächen 120, 122 und 124 vollständig verdampft wird. Der Verdampfungsendpunkt ist dabei aufgrund des Durchlaufverdampfer-Prinzips variabel, wobei im Heizflächenbereich nach dem Verdampfungsendpunkt eine Überhitzung des erzeugten Dampfes eintritt. Zur nutzbringenden Rückführung des dabei gewonnenen Dampfes D in den Wasser-Dampf-Kreislauf 24 der Dampfturbinenanlage 1b ist die dritte Verdampferheizfläche 124 ausgangsseitig über eine Dampfleitung 126 an den Wasserabscheider 50 angeschlossen.

Bedarfsweise, wie dies durch die gestrichelte Linie in den Figuren 1 bis 3 angedeutet ist, kann der dritten Verdampferheizfläche 124 auch noch eine Überhitzerheizfläche 128 nachgeschaltet sein. Von dieser Überhitzerheizfläche 128 bereitgestellter überhitzter Dampf ist dann über eine Überströmleitung 130 dem aus dem Überhitzer 52 abströmenden Frischdampf für den Hochdruckteil 20a der Dampfturbine 20 zumischbar.

Aufgrund der Ausgestaltung der Verdampferheizflächen 120, 122, 124 als Zwangdurchlauf-Dampferzeuger ist die Bereitstellung vergleichsweise hochwertigen Dampfes D für die Rückführung in den Wasser-Dampf-Kreislauf 24 der Dampfturbinenanlage 1b möglich. Somit ist die bei der Kühlung der Kühlluft für die Gasturbine 2 anfallende Wärme besonders nutzbringend rückführbar. Die Einspeisung des in der Vorrichtung 100 bei der Kühlung des Kühlmittels für die Gasturbine 2 erzeugten überhitzten Dampfes D erfolgt im Ausführungsbeispiel somit in die Hochdruckstufe oder höchste Druckstufe des Wasser-Dampf-Kreislaufs 24. Alternativ kann aber auch, insbesondere im Hinblick auf äußere vorgegebene Randbedingungen, eine Einspeisung in eine andere Druckstufe, insbesondere in eine Mitteldruckstufe, vorgesehen sein.

Um einen zuverlässigen Betrieb der Vorrichtung 100 auch im Schwachlastbereich zu ermöglichen, ist die erste Verdampferheizfläche 120 bedarfsweise umführbar ausgebildet. Dazu ist der ersten Verdampferheizfläche 120 eingangsseitig ein Dreiwegeventil 131 vorgeschaltet, über das eine Umführungsleitung 132 von der Zuführleitung 112 abzweigt. Die Umführungsleitung 132 mündet ausgangsseitig in eine im Ausgangsbereich der ersten Verdampferheizfläche 120 vorgesehene Einspeisestelle, insbesondere in deren vorletzten Zwischensammler, ein. Dadurch ist gewährleistet, daß auch im Schwachlastbereich, in dem lediglich eine vergleichsweise geringe Menge an Strömungsmedium bereitstellbar ist, keinerlei Verdampfung in der ersten Verdampferheizfläche 120 erfolgt und somit ausschließlich flüssiges Strömungsmedium ohne mitgeführte Dampfanteile der nachgeschalteten Verdampferheizfläche zuströmt. Im Bedarfsfall, also insbesondere im Schwachlastbetrieb, kann das Strömungsmedium somit durch die geeignete Umschaltung des Dreiwegeventils 131 über die Umführungsleitung 132 größtenteils an der Mehrzahl der Heizflächenrohre der ersten Verdampferheizfläche 120 vorbeigeführt werden.

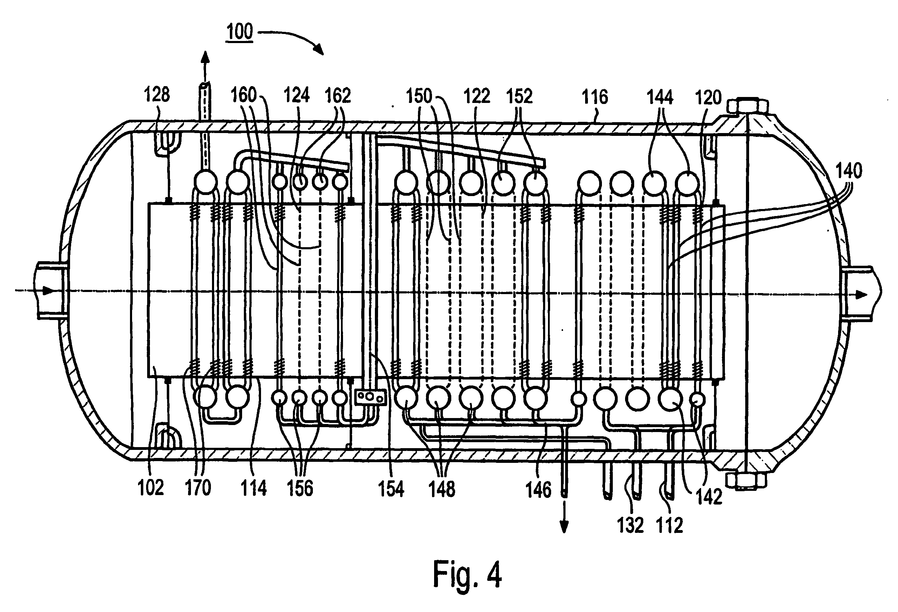

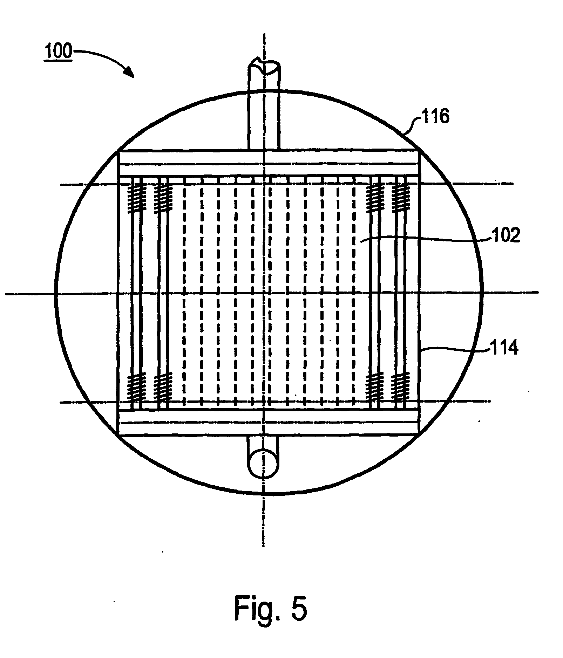

Der genauere Aufbau der Vorrichtung 100 zur Kühlmittelkühlung der Gasturbine 2 ist Figur 4 im Längsschnitt und Figur 5 im Querschnitt entnehmbar. Wie dort ersichtlich ist, umfaßt die Vorrichtung 100 als äußeren Mantel ein vergleichsweise starkwandig ausgebildetes Druckgefäß 116, in dem das zur Bildung des Kühlmittelkanals 102 vorgesehene Innengehäuse 114 angeordnet ist. Die Vorrichtung 100 ist dabei in der Art einer liegenden Bauweise für einen im wesentlichen horizontal ausgerichteten Kühlmittelkanal 102 ausgebildet. Mit anderen Worten: der Kühlmittelkanal 102 der Vorrichtung 100 ist für eine Durchströmung des Kühlmittels für die Gasturbine 2 in im wesentlichen horizontaler Richtung ausgestaltet.

Im Kühlmittelkanal 102 sind, wie dies insbesondere aus Figur 4 ersichtlich ist, die erste Verdampferheizfläche 120, die zweite Verdampferheizfläche 122, die dritte Verdampferheizfläche 124 sowie die Überhitzerheizfläche 128 angeordnet. Die erste Verdampferheizfläche 120 ist dabei als Vorwärmerheizfläche oder Economiser ausgestaltet und ist von einer Anzahl von hinsichtlich des Strömungsmediums parallel geschalteten Verdampferrohren 140 gebildet. Die Verdampferrohre 140, denen zur Bildung der ersten Verdampferheizfläche 120 eine Anzahl von geeignet positionierten, auch als Eintrittsverteiler bezeichneten Eintrittssammlern 142 vor- sowie eine Anzahl von geeignet positionierten Austrittssammlern 144 nachgeschaltet sind, sind dabei eingangsseitig mit der Zuströmleitung 112 verbunden. Die den Verdampferrohren 140 nachgeschalteten Austrittssammler 144 sind ihrerseits mit einer Überströmleitung 146 verbunden, an die eine Anzahl von der zweiten Verdampferheizfläche 122 zugeordneten Eintrittssammlern 148 angeschlossen sind. Die Eintrittssammler 148 sind dabei zusätzlich eingangsseitig an die Umführungsleitung 132 angeschlossen, die in in Figur 4 nicht näher dargestellter Weise mit dem Dreiwegeventil 131 verbunden ist.

Die Eintrittssammler 148 sind einer Anzahl von die zweite Verdampferheizfläche 122 bildenden Verdampferrohren 150 vorgeschaltet. Die zweite Verdampferheizfläche 122 ist dabei insbesondere im Hinblick auf die Dimensionierung und Positionierung der sie bildenden Verdampferrohre 150 als eigentliche Verdampferheizfläche ausgebildet. Ausgangsseitig sind die Verdampferrohre 150 mit einer Anzahl von der zweiten Verdampferheizfläche 122 zugeordneten Austrittssammlern 152 verbunden.

Diese Austrittssammler 152 sind ihrerseits ausgangsseitig über ein Überströmsystem 154 mit einer Anzahl von der dritten Verdampferheizfläche 124 zugeordneten Eintrittssammlern 156 verbunden. Diese sind einer Anzahl von die dritte Verdampferheizfläche 124 bildenden Verdampferrohren 160 vorgeschaltet. Ausgangsseitig münden diese Verdampferrohre 160 in einer Anzahl von der dritten Verdampferheizfläche 124 zugeordneten Austrittssammlern 162. Die dritte Verdampferheizfläche 124 ist dabei ebenfalls als eigentliche Verdampferheizfläche ausgebildet.

Die der dritten Verdampferheizfläche 124 zugeordneten Austrittssammler 162 sind ausgangsseitig mit einer Anzahl von die Überhitzerheizfläche 128 bildenden Verdampferrohren 170 verbunden.

Die Vorrichtung 100 ist somit in der Art eines Durchlauf-Dampferzeugers in liegender Bauweise ausgebildet. Diese "liegende Bauart" ermöglicht insbesondere ein einfaches und robustes Betriebsverhalten der Vorrichtung 100 bei hoher betrieblicher Stabilität und nur geringem strömungsmediumseitigen Druckverlusten. Gerade die liegende Bauweise ermöglicht zudem eine einfache Aufstellung der Vorrichtung 100 ohne aufwendiges Stützgerüst auf vergleichsweise einfachen Streifenfundamenten. Die zur Bildung des Durchlauf-Dampferzeugers strömungsmediumseitig hintereinandergeschalteten Verdampferrohre 140, 150, 160, 170 sind dabei jeweils vertikal, also mit ihrer Längsachse in im wesentlichen senkrechter Richtung, ausgerichtet. Zur Sicherstellung eines hohen Wärmeübertrags von der den Kühlmittelkanal 102 durchströmenden Kühlluft auf das die Verdampferrohre 140, 150, 160, 170 durchströmendes Strömungsmedium können die Verdampferrohre 140, 150, 160, 170 zudem jeweils mit einer Innen- und/oder Außenberippung versehen sein.

Für eine besonders flexible und an den jeweiligen Betriebszustand der Gas- und Dampfturbinenanlage 1, 1', 1" angepaßte Kühlmittelkühlung der Gasturbine 2 ist die Kühlleistung der Vorrichtung 100 zur Kühlmittelkühlung der Gasturbine 2 einstellbar und an den jeweiligen Betriebszustand anpaßbar. Dazu ist der Vorrichtung 100, wie dies aus den Figuren 1 bis 3 ersichtlich ist, eine Regeleinrichtung 180 zum Einstellen der Durchströmrate des Strömungsmediums durch die Vorrichtung 100 zugeordnet. Die Regeleinrichtung 180 ist dabei ausgangsseitig zur Übermittlung eines Stellbefehls der Stellsignals S über eine Signalleitung 182 mit dem in die Zuführleitung 112 der Vorrichtung 100 geschalteten Drosselorgan 110 verbunden. Über die Regeleinrichtung 180 ist somit durch Vorgabe eines geeigneten Stellbefehls oder Stellsignals S die Ventilstellung des Drosselorgans 110 und somit die Beaufschlagung der Vorrichtung 100 mit Strömungsmedium als Sekundärkühlmittel einstellbar. Eingangsseitig ist die Regeleinrichtung 180 über eine erste Signalleitung 184 mit einem ersten Temperaturfühler 186 und über eine zweite Signalleitung 188 mit einem zweiten Temperaturfühler 190 verbunden. Der erste Temperaturfühler 186 ist dabei in einem Bereich vor der Vorrichtung 100 an der Kühlluftleitung 104 angeordnet. Der zweite Temperaturfühler 190 ist hingegen in einem Bereich nach der Vorrichtung 100 an der Kühlluftleitung 104 angeordnet. Somit sind der Regeleinrichtung 180 Meßwerte für die Temperatur der zu kühlenden Kühlluft für die Gasturbine 2 vor, deren Eintritt in die Vorrichtung 100 und nach deren Austritt aus der Vorrichtung 100 zuführbar. Desweiteren sind der Regeleinrichtung 180, wie durch den Pfeil 192 angedeutet, weitere Parameter wie beispielsweise Temperatursollwerte oder manuell vorgegebene Stellwerte zuführbar.

Die Regeleinrichtung 180 kann somit anhand eines Soll-Ist-Vergleichs für die Temperatur der zu kühlenden Kühlluft für die Gasturbine 2 einen Kennwert für den Kühlbedarf bei der Rückkühlung dieser Kühlluft ermitteln. In Abhängigkeit von diesem für den Kühlbedarf charakteristischen Kennwert kann sodann eine Ausgabe eines Stellsignals S an das Drosselorgan 110 erfolgen, über das eine an den Kühlbedarf bei der Rückkühlung der Kühlluft angepaßte Durchströmrate des Strömungsmediums durch die Vorrichtung 100 erfolgen kann.

Für eine besonders flexible und zudem genaue Einstellung der Kühlleistung in der Vorrichtung 100 bei der Rückkühlung der Kühlluft für die Gasturbine 2 ist die Vorrichtung 100 zudem mit einem Gemisch aus Strömungsmedium unterschiedlicher Temperaturstufen beaufschlagbar. Dazu ist die Zuführleitung 112 der Vorrichtung 100 eingangsseitig jeweils sowohl an einer Stelle vor einem Vorwärmer als auch an einer Stelle nach einem vorwärmer mit dem Speisewasserstrang des Wasser-Dampf-Kreislaufs 24 der Dampfturbinenanlage 1b verbunden. Im Ausführungsbeispiel gemäß Figur 1 ist dazu die Zuführleitung 112 einerseits an einer Stelle 200 nach der Speisewasserpumpe 42 an den Speisewasserstrang des Wasser-Dampf-Kreislaufs 24 angeschlossen. Das an der Stelle 200 in die Zuführleitung 112 eingespeiste Speisewasser hat somit einerseits den Kondensatvorwärmer 38 durchlaufen und weist somit eine vergleichsweise erhöhte Temperatur auf. Andererseits steht das Speisewasser an dieser Stelle auch unter einem vergleichsweise hohen, von der Speisewasserpumpe 42 erzeugten Druck, so daß dieses Speisewasser den Verdampferheizflächen 120, 122 und 124 der Vorrichtung 100 ohne weitere Mittel zur Druckerhöhung zugeführt werden kann.

Zusätzlich ist die Zuführleitung 112 im Ausführungsbeispiel nach Figur 1 aber auch über eine Teilstromleitung 202 mit der Kondensatleitung 35 verbunden. Über die Teilstromleitung 202, in die eine Kondensat-Zumisch-Pumpe 204 sowie ein Drosselorgan 206 geschaltet sind, ist somit an einer Stelle 208 vor dem Kondensatvorwärmer 38 entnommenes und somit vergleichsweise kaltes Kondensat K in die Zuführleitung 112 einspeisbar. Der für die Einspeisung dieses Kondensats K in die Zuführleitung 112 erforderliche Druck wird dabei durch die Kondensat-Zumisch-Pumpe 204 erzeugt.

Das in die Teilstromleitung 202 geschaltete Drosselorgan 206 ist weiterhin über eine Signalleitung 210 mit einem Stellsignal S der Regeleinrichtung 180 beaufschlagbar. Über die Regeleinrichtung 180 kann somit eine an die jeweilige Betriebssituation angepaßte, insbesondere kühlbedarfsabhängige Zumischung des vergleichsweise kalten Kondensats K in die Zuführleitung 112 erfolgen. Mit anderen Worten: die Drosselorgane 110, 206 stellen im Ausführungsbeispiel gemäß Figur 1 Mittel dar, über die die Durchströmraten verschiedener für die Beaufschlagung der Vorrichtung 100 vorgesehener Teilströme des Strömungsmediums einstellbar sind. Diesen Mitteln ist die Regeleinrichtung 180 derart zugeordnet, daß das Zuströmverhältnis der Teilströme in Abhängigkeit von einem für einen Temperaturwert des zu kühlenden Kühlmittels der Gasturbine 2 charakteristischen Kennwerts, insbesondere im Hinblick auf einen Vergleich dieses Kennwerts mit einem Sollwert, einstellbar ist.

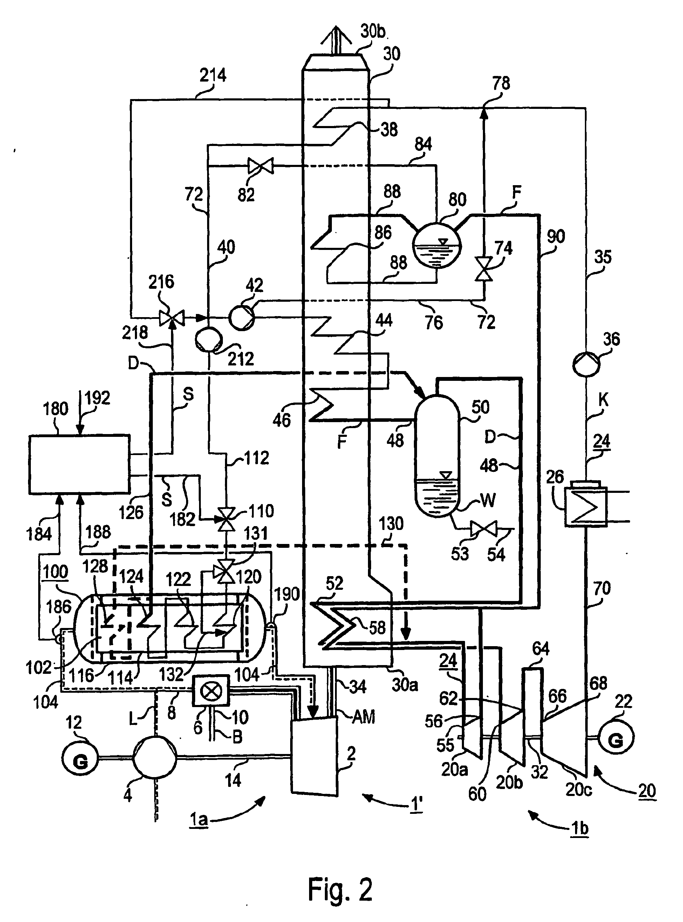

Im Ausführungsbeispiel gemäß Figur 2, also bei der Gas- und Dampfturbinenanlage 1', ist ebenfalls die Beaufschlagung der Vorrichtung 100 mit einem einstellbaren Gemisch aus vor einem Durchlauf durch den Kondensatvorwärmer 38 entnommenem Kondensat K und nach einem Durchlauf durch den Kondensatvorwärmer 38 entnommenem Kondensat K vorgesehen. Im Ausführungsbeispiel gemäß Figur 2 ist die Zuströmleitung 112 jedoch eingangsseitig an die Zuführleitung 40, also vor Eintritt des Kondensats K in die Speisewasserpumpe 42, angeschlossen.

Um dabei den für einen Eintritt in die Vorrichtung 100 erforderlichen Druck im Strömungsmedium bereitzustellen, ist in die Zuführleitung 112 im Ausführungsbeispiel nach Figur 2 eine Druckerhöhungspumpe 212 geschaltet. Zur bedarfsweisen Beimischung von vergleichsweise kaltem Kondensat K in den als Strömungsmedium für die Vorrichtung 100 aus der Zuführleitung 40 abgezweigten Teilstrom an vorgewärmtem Kondensat K ist auch bei der Gas- und Dampfturbinenanlage 1' nach Figur 2 eine Teilstromleitung 214 vorgesehen. Die Teilstromleitung 214 ist eingangsseitig mit der Kondensatleitung 35 verbunden und mündet ausgangsseitig an einer Stelle vor der Druckerhöhungspumpe 212 in die Zuströmleitung 112. Zur Einstellung einer bedarfsgerechten Zumischrate an kaltem Kondensat K in die Zuführleitung 112 ist in die Teilstromleitung 214 ein Drosselorgan 216 geschaltet, das über eine Signalleitung 218 mit einem Stellwert S aus der Regeleinrichtung 180 beaufschlagbar ist.

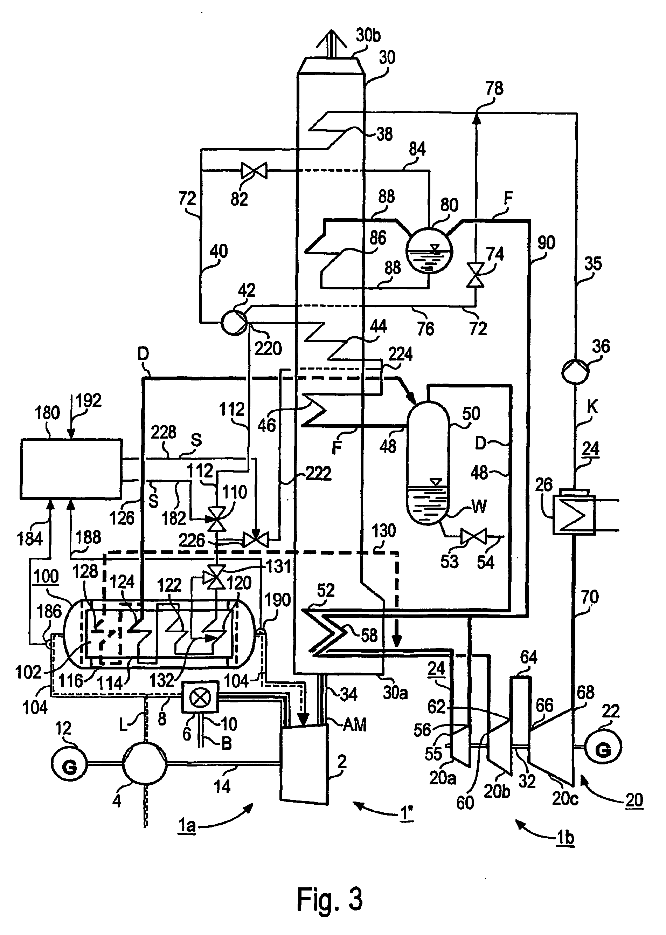

Bei der Gas- und Dampfturbinenanlage 1" gemäß Figur 3 ist die Bespeisung der Vorrichtung 100 mit einem geeignet gewählten Gemisch aus nicht vorgewärmtem und vorgewärmtem Speisewasser vorgesehen. Dazu zweigt die Zuführleitung 112 an einer Stelle 220 nach der Speisewasserpumpe 42 vom Speisewasserstrang des Wasser-Dampf-Kreislaufs 24 ab. Somit gelangt durch die Speisewasserpumpe 42 unter hohem Druck stehendes, noch nicht im Speisewasservorwärmer 44 vorgewärmtes Speisewasser in die Zuführleitung 112. Für eine vergleichsweise fein dosierte Temperatureinstellung ist in dieser Ausführungsform zudem eine Teilstromleitung 222 vorgesehen, die an einer Stelle 224 nach dem Speisewasservorwärmer 44 vom Speisewasserstrang des Wasser-Dampf-Kreislaufs 24 abzweigt. Die Teilstromleitung 222, in die ein Drosselorgan 226 geschaltet ist, mündet ausgangsseitig in die Zuführleitung 112, so daß über die Teilstromleitung 222 im Speisewasservorwärmer 44 noch weiter vorgewärmtes, unter hohem Druck stehendes Speisewasser in die Zuführleitung 112 zumischbar ist.

Das Drosselorgan 226 ist dabei über eine Signalleitung 228 mit einem Stellsignal S aus der Regeleinrichtung 180 beaufschlagbar, so daß auch in dieser Ausführungsform das Mischungsverhältnis der Teilströme von vergleichsweise warmem und vergleichsweise kaltem Strömungsmedium bedarfsabhängig und insbesondere abhängig von dem gemessenen Temperaturkennwerten der zu kühlenden Kühlluft für die Gasturbine 2 einstellbar ist. Die Vorrichtung 100, die in den drei genannten Ausführungsbeispielen jeweils mit einem an den aktuellen Kühlbedarf anpaßbarem Gemisch von Teilströmen unterschiedlicher Temperatur eines Strömungsmediums beaufschlagbar ist, ist in den Ausführungsbeispielen als Zwangdurchlauf-Dampferzeuger ohne zwischen die Verdampferheizflächen 120, 122, 124, 128 geschaltete Abscheideflasche ausgeführt.

In dieser Ausführungsform ist ein Anfahren der Vorrichtung 100 mit ungefüllten (trockenem) oder teilgefüllten Verdampferheizflächen 120, 122, 124, 128 vorgesehen. Dies ist insbesondere im Hinblick auf die zu erwartenden Temperaturen des zu kühlenden Kühlmittels für die Gasturbine 2 von bis zu etwa 500°C gerade bei einer Verwendung temperaturfester Materialien wie beispielsweise 13 Cro Mo 44 oder 15 Mo 3 für die Verdampferrohre 140, 150, 160, 170 ohne nennenswerte Überhitzungsgefahr möglich. Somit ist bei vergleichsweise einfacher Bauweise die Vorrichtung 100 bereits beim Anfahren besonders gut nutzbar, wobei insbesondere die Gefahr einer zu starken Kühlung des Kühlmittels für die Gasturbine 2 während des Anfahrens vermieden ist.

## Patentansprüche

1. Vorrichtung (100) zur Kühlmittelkühlung einer Gasturbine (2), bei der in einem mit der Gasturbine (2) verbundenen Kühlmittelkanal (102) eine Anzahl von hinsichtlich eines Strömungsmediums zur Bildung eines Zwangdurchlauf-Dampferzeugers zusammengeschaltete Verdampferrohre (140, 150, 160, 170) angeordnet sind, wobei das Strömungsmedium in den Verdampferrohren (140,150,160,170) in einem einzigen Durchlauf vollständig verdampfbar ist, **dadurch gekennzeichnet, dass** der Kühlmittelkanal (102) für eine Durchströmung des Kühlmittels für die Gasturbine (2) in im wesentlichen horizontaler Richtung ausgebildet ist, wobei die Verdampferrohre (140, 150, 160, 170) mit ihrer Längsachse in im wesentlichen senkrechter Richtung ausgerichtet sind.

2. Vorrichtung (100) nach Anspruch 1, deren Kühlmittelkanal (102) mit Verdichterluft (L) aus der Gasturbine (2) beaufschlagbar ist.

3. Vorrichtung (100) nach einem der Ansprüche 1 oder 2, deren Verdampferrohre (140, 150, 160, 170) jeweils eine Innenberippung aufweisen.

4. Vorrichtung (100) nach einem der Ansprüche 1 bis 3, deren Verdampferrohre (140, 150, 160, 170) über eine diesen eingangsseitig vorgeschaltete Zuführleitung (40, 112) mit dem Strömungsmedium beaufschlagbar sind, wobei in die Zuführleitung (40, 112) Mittel zum Einstellen der Durchströmrate des Strömungsmediums geschaltet sind.

5. Vorrichtung (100) nach Anspruch 4, bei der die Mittel zum Einstellen der Durchströmrate des Strömungsmediums ein in die Zuführleitung (40, 112) geschaltetes Drosselorgan (110, 206, 116, 226) umfassen.

6. Vorrichtung (100) nach Anspruch 4 oder 5, bei der den Mitteln zum Einstellen der Durchströmrate des Strömungsmediums eine Regeleinrichtung (180) zugeordnet ist, die eingangsseitig mit einem dem Kühlmittelkanal (102) zugeordneten Temperaturfühler (186, 190) verbunden ist.

7. Gas- und Dampfturbinenanlage (1, 1', 1") mit einem einer Gasturbine (2) rauchgasseitig nachgeschalteten Abhitzedampferzeuger (30), dessen Heizflächen in den Wasser-Dampf-Kreislauf (24) einer Dampfturbine geschaltet sind, und mit einer der Gasturbine (2) zugeordneten Vorrichtung (100) nach einem der Ansprüche 1 bis 6, deren Verdampferrohre (140, 150, 160, 170) eingangsseitig über eine Zuführleitung (40, 112) mit dem Speisewasserstrang des Wasser-Dampf-Kreislaufs (24) der Dampfturbine verbunden sind.

8. Gas- und Dampfturbinenanlage (1, 1', 1") Anspruch 7, bei der die Verdampferrohre (140, 150, 160, 170) der der Gasturbine (2) zugeordneten Vorrichtung (100) zur Kühlmittelkühlung ausgangsseitig an eine Hochdruckstufe des Wasser-Dampf-Kreislaufs (24) angeschlossen sind.

9. Gas- und Dampfturbinenanlage (1, 1', 1") nach Anspruch 7 oder 8, bei der die Zuführleitung (40, 112) eingangsseitig über eine erste Teilstromleitung (202) mit einem einem Speisewasservorwärmer (44) vorgeschalteten ersten Teilstück des Speisewasserstrangs und über eine zweite Teilstromleitung (214) mit einem dem Speisewasservorwärmer (44) nachgeschalteten zweiten Teilstück des Speisewasserstrangs verbunden ist.

10. Gas- und Dampfturbinenanlage (1, 1', 1") nach Anspruch 9, bei der in die erste und in die zweite Teilstromleitung (202, 214) jeweils Mittel zum Einstellen der Durchströmrate des jeweiligen Teilstroms an Strömungsmedium geschaltet sind, denen eine Regeleinrichtung (180) zugeordnet ist, über die das Zuströmverhältnis der Teilströme in den Teilstromleitungen (202, 214, 222) in Abhängigkeit von einem für einen Temperaturwert des zu kühlenden Kühlmittels charakteristischen Kennwert einstellbar ist.

## Claims

1. Device (100) for the coolant cooling of a gas turbine (2), in which a number of interconnected evaporator tubes (140, 150, 160, 170) are arranged in a coolant channel (102) connected to the gas turbine (2) for a flow medium for the formation of a forced throughflow steam generator, whereby the flow medium is able to be evaporated completely in the evaporator tubes (140, 150, 160, 170) in a single operation, **characterised in that** the coolant channel (102) is designed for direct flow of the coolant for the gas turbine (2) in an essentially horizontal direction, whereby the longitudinal axis of the evaporator tubes (140, 150, 160, 170) is essentially aligned in a vertical direction.

2. Device (100) according to claim 1, wherein compressor air (L) from the gas turbine (2) can be applied to the coolant channel (102).

3. Device (100) according to one of claims 1 or 2, of which the evaporator tubes (140, 150, 160, 170) have internal fins in each case.

4. Device (100) according to one of claims 1 to 3, wherein the flow medium can be applied to the evaporator tubes (140, 150, 160, 170) via a supply line (40, 112) preceding them on the inlet side, wherein means to select the throughflow rate of the flow medium are connected to the supply line (40, 112).

5. Device (100) according to claim 4, wherein the means of setting the throughflow rate of the flow medium comprise a flow restrictor (110, 206, 116, 226) connected to the supply line (40, 112).

6. Device (100) according to claim 4 or 5, wherein the means of setting the throughflow rate of the flow medium are assigned a control system (180) which is connected on the inlet side to a temperature sensor (186, 190) assigned to the coolant channel (102).

7. Gas and steam turbine (1, 1', 1") with a waste heat steam generator (30) connected on the exhaust gas side of a gas turbine (2), wherein the heating surfaces are connected to the water-steam circuit (24) of a steam turbine, and with a device (100) assigned to the gas turbine (2) according to one of claims 1 to 6, wherein the evaporator tubes (140, 150, 160, 170) are connected on the inlet side via a supply line (40, 112) to the feedwater train of the water-steam circuit (24) of the steam turbine.

8. Gas and steam turbine (1, 1', 1") according to claim 7, wherein the evaporator tubes (140, 150, 160, 170) of the device (100) assigned to the gas turbine (2) for coolant cooling are connected on the outlet side to a high-pressure stage of the water-steam circuit (24).

9. Gas and steam turbine (1, 1', 1") according to claim 7 or 8, wherein the supply line (40, 112) is connected on the inlet side via a first partial flow line (202) to a first partial component of the feedwater train preceding a feedwater preheater (44) and via a second partial flow line (214) to a second partial component of the feedwater train downstream of the feedwater preheater (44).

10. Gas and steam turbine (1, 1', 1") according to claim 9, wherein in each of the first and second partial flow lines (202, 214), means of setting the throughflow rate of the respective partial flow are connected to flow medium to which a control system (180) is assigned, via which the flow ratio of the partial flows is adjustable in the partial flow lines (202, 214, 222) as a function of a characteristic value for a temperature value of the coolant to be cooled.

## Revendications

1. Dispositif ( 100 ) de refroidissement du fluide de refroidissement d'une turbine ( 2 ) à gaz, dans lequel il est disposé, dans un canal ( 102 ) pour du fluide de refroidissement communiquant avec la turbine ( 2 ) à gaz, un certain nombre de tubes ( 140, 150, 160, 170 ) d'évaporateur montés ensemble du point de vue d'un fluide en écoulement pour former un générateur de vapeur à passage forcé, le fluide en écoulement pouvant être évaporé complètement en un seul passage dans les tubes ( 140, 150, 160, 170 ) d'évaporateur, **caractérisé en ce que** le canal (102) pour du fluide de refroidissement est conçu pour un passage du fluide de refroidissement de la turbine ( 2 ) à gaz dans la direction sensiblement horizontale, les tubes ( 140, 150, 160, 170 ) d'évaporateur ayant leur axe longitudinal dirigé dans la direction sensiblement verticale.

2. Dispositif ( 100 ) suivant la revendication 1, dont le canal ( 102 ) pour du fluide de refroidissement peut être alimenté par de l'air ( L ) de compresseur provenant de la turbine ( 2 ) à gaz.

3. Dispositif ( 100 ) suivant l'une des revendications 1 ou 2, dont les tubes ( 140, 150, 160, 170) d'évaporateur ont, respectivement, un nervurage intérieur.

4. Dispositif ( 100 ) suivant l'une des revendications 1 à 3, dont les tubes ( 140, 150, 160, 170 ) d'évaporateur peuvent être alimentés en le fluide en écoulement par un conduit ( 40, 112 ) d'apport monté en aval côté entrée de ces tubes, des moyens de réglage de la vitesse de passage du fluide en écoulement étant montés dans le conduit ( 40, 112 ) d'apport.

5. Dispositif ( 100 ) suivant la revendication 4, dans lequel les moyens de réglage de la vitesse de passage du fluide en écoulement comprennent un organe ( 110, 206, 116, 226 ) d'étranglement monté dans le conduit ( 40, 112 ) d'apport.

6. Dispositif ( 100 ) suivant la revendication 4 ou 5, dans lequel il est associé aux moyens de réglage de la vitesse de passage du fluide en écoulement un dispositif ( 180 ) de régulation, qui est relié du côté entrée à une sonde ( 186, 190 ) de température associée au canal ( 102 ) pour du fluide de refroidissement.

7. Installation ( 1, 1', 1" ) de turbine à gaz et de turbines à vapeur, comprenant un générateur (30) de vapeur à récupération de la chaleur perdue, qui est monté en aval côté des gaz brûlés d'une turbine ( 2 ) à gaz et dont des surfaces de chauffe sont montées dans le circuit ( 24 ) eau-vapeur d'une turbine à vapeur, et comprenant un dispositif ( 100 ) associé à la turbine (2) à gaz suivant l'une des revendications 1 à 7, dont les tubes ( 140, 150, 160, 170 ) d'évaporateur communiquent côté entrée par un conduit ( 40, 112 ) d'apport avec la branche d'eau d'alimentation du circuit ( 24 ) eau-vapeur de la turbine à vapeur.

8. Installation ( 1, 1', 1" ) de turbine à gaz et de turbine à vapeur suivant la revendication 7, dans laquelle les tubes ( 140, 150, 160, 170 ) d'évaporateur, du dispositif ( 100 ) associé à la turbine ( 2 ) à gaz et de refroidissement, du fluide de refroidissement sont reliés côté sortie à un étage haute pression du circuit ( 24 ) eau-vapeur.

9. Installation ( 1, 1', 1" ) de turbines à gaz et de turbines à vapeur suivant la revendication 7 ou 8, dans laquelle le conduit ( 40, 112 ) d'apport communique côté entrée par un premier conduit ( 202 ) de courant partiel avec un premier tronçon de la voie ( 2 ) d'eau d'alimentation monté en amont d'un préchauffeur ( 44 ) pour de l'eau d'alimentation et par un deuxième conduit ( 214 ) de courant partiel avec un deuxième tronçon de la branche (2) d'eau d'alimentation monté en aval du préchauffeur ( 44 ) d'eau d'alimentation.

10. Installation ( 1, 1',1" ) de turbines à gaz et de turbines à vapeur suivant la revendication 9, dans laquelle il est monté dans le premier et dans le deuxième conduits ( 202, 214 ) de courant partiel, respectivement, des moyens de réglage de la vitesse de passage du courant partiel respectif en fluide en écoulement auxquels est associé un dispositif ( 180 ) de régulation, par lequel le rapport d'afflux du courant partiel dans les conduits ( 202, 214, 222 ) de courant partiel peut être réglé en fonction d'une valeur caractéristique de la valeur de la température du fluide de refroidissement à refroidir.
